Europäisches Patentamt

European Patent Office

Office européen des brevets

(19)

(11) Veröffentlichungsnummer: **0 317 686**

**A1**

# EUROPÄISCHE PATENTANMELDUNG

(21) Anmeldenummer: **87730156.4**

(22) Anmeldetag: **24.11.87**

(51) Int. Cl.⁴: **G11B 25/04 , G06K 7/08**

(43) Veröffentlichungstag der Anmeldung:
**31.05.89 Patentblatt 89/22**

(34) Benannte Vertragsstaaten:
**AT BE CH DE ES FR GB IT LI LU NL SE**

(71) Anmelder: **MANNESMANN Aktiengesellschaft**
**Mannesmannufer 2**
**D-4000 Düsseldorf 1(DE)**

(72) Erfinder: **Fehrenbach, Christian, Dipl.-Ing.**
**Konrad-Adenauer-Strasse 42**
**D-7742 Schonach(DE)**
Erfinder: **Ketterer, Gunter**
**Am Wald 9**
**D-7731 Unterkirnach(DE)**
Erfinder: **Schlassus, Wolfgang**
**Rietheimerstrasse 16**
**D-7730 VS-Villingen(DE)**

(74) Vertreter: **Presting, Hans-Joachim, Dipl.-Ing.**
**et al**
**Patentanwaltsbüro Meissner & Meissner**
**Herbertstrasse 22**
**D-1000 Berlin 33 West(DE)**

(54) **Einrichtung für die Datenverarbeitung mittels magnetischen informationsträgern.**

(57) Eine Einrichtung (1) für die Datenverarbeitung mittels magnetischen Informationsträgern (2) weist einen Schreib-Lese-Kopf (4) auf, wobei zwischen dem Informationsträger und dem Schreib-Lese-Kopf (4) bei Verarbeitung eine Relativbewegung stattfindet, indem ein Schlitten (5) durch einen Motor (6) antreibbar ist.

Um aus mechanischen Fehlern der Einrichtung entstehende Verzerrungen beim Lesen der Daten zu vermeiden, wird vorgeschlagen, daß die Antriebsverbindung zwischen Schlitten (5) und Motor (6) axial spielfrei ist und daß der Schreib-Lese-Kopf (4) mittels eines Halters (14) ebenfalls in axialer Bewegungsrichtung spielfrei und senkrecht zur Informationsträger-Oberfläche (2a) federnd einstellbar ist.

FIG. 3

EP 0 317 686 A1

Einrichtung für die Datenverarbeitung mittels magnetischen Informations-trägern

Die Erfindung betrifft eine Einrichtung für die Datenverarbeitung mittels magnetischen Informationsträgern, mit einem Schreib-Lese-Kopf, wobei zwischen Informationsträger und Schreib-Lese-Kopf bei Verarbeitung eine Relativbewegung stattfindet, indem ein Schlitten durch einen Motor antreibbar ist.

Bekannte Magnetstreifen-Modulbaugruppen weisen einen mittels Schraubspindel und Mctor angetriebenen Schlitten auf. Anstelle des Elementes einer Schraubspindel kann u.U. ein Seilzug treten. Die Lagerung der Schraubspindel zum Geräterahmen ist bisher nicht spielfrei in axialer Richtung. Der Schreib-Lese-Kopf kann daher nicht spielfrei und damit mit konstanter Geschwindigkeit bewegt werden. In einem solchen Fall wandern die magnetischen Aufzeichnungen (bits) relativ gegeneinander, so daß eine Informationsverfälschung auftritt. Im einen Fall wird eine verzerrte Aufzeichnung erzeugt und im andern Fall kann nicht fehlerfrei gelesen werden. Hier ist zu berücksichtigen, daß die Informationsdichte gemäß einschlägiger Normen durch einen Abstand von bit zu bit von 0,06 mm vorgeschrieben ist. Die Toleranz beträgt z.B. beim Schreiben hierbei + 5 % von 0,06 mm. Derartige Einrichtungen erfordern daher eine extrem hohe Genauigkeit der Bewegung für einen durch einen Motor angetriebenen Schlitten.

Der vorliegenden Erfindung ist deshalb die Aufgabe zugrundegelegt, eine Einrichtung für die Datenverarbeitung mittels magnetischen Informationsträgern zu schaffen, mit der fehlerfrei aufgezeichnet werden kann und unverzerrte Daten gelesen werden können.

Die gestellte Aufgabe wird aufgrund der eingangs bezeichneten Einrichtung erfindungsgemäß dadurch gelöst, daß die Antriebsverbindung zwischen Schlitten und Motor axial spielfrei ist und daß der Schreib-Lese-Kopf mittels eines Halters ebenfalls in axialer Bewegungsrichtung spielfrei und senkrecht zur Informationsträger-Oberfläche federnd einstellbar ist. Einer solchen Lösung kommt eine doppelte Funktion zu: Die geforderte Genauigkeit beim Lesen bzw. Schreiben der Daten wird eingehalten, und außerdem werden unvermeidliche von der theoretischen Lage abweichende Lagen des Informationsträgers gleichzeitig erfaßt.

Nach weiteren Merkmalen ist vorgesehen, daß der Schreib-Lese-Kopf auf dem Schlitten angeordnet ist und an dem Halter federnd gelagert ist, wobei der Halter zumindest zwei in den axialen Bewegungsrichtungen voneinander beabstandete, senkrecht zu den Bewegungsrichtungen federnde Lagerführungen aufweist. Ein solcher Halter kann aufgrund der eingangs vorgeschlagenen Spielfreiheit in axialer Bewegungsrichtung spielfrei mit dem Schlitten verbunden werden und dennoch in Querrichtung Anpassungsbewegungen an den unebenen Informationsträger ausführen.

Dieser Gedanke wird noch für theoretisch gewellte und verdrillte Informationsträger dadurch weiterentwickelt, daß der Halter in einer zur Informationsträger-Oberfläche senkrechten Ebene an den federnden Lagerführungen schwenkbar gelagert ist. Dadurch wirken auf den Halter keine Rückstellkräfte, d.h. die Lage des Halters ist jederzeit stabil.

Eine Ausgestaltung der Erfindung besteht darin, daß die federnden Lagerführungen jeweils aus einem Lagertopf und einem starren, mittig befestigten Lagerstift, ferner aus einer im Lagertopfgrund anliegenden Druckfeder und einer auf dem Lagerstift geführten Lagerbuchse, gegen die sich die Druckfeder abstützt, besteht. Eine solche Ausführungsform der Erfindung ist besonders leichtgewichtig und erfüllt alle geforderten Funktionen.

Hinsichtlich der Antriebsverbindung zwischen Schlitten und Motor, die axial spielfrei zu sein hat, wird vorgeschlagen, daß der Schlitten mittels einer Schraubspindel antreibbar ist, die im Gestell axial spielfrei mittels eines Schulterlagers und auf der Motorseite mittels eines Loslagers gelagert ist, wobei zwischen einem Schraubspindelbund und dem Motorwellenbund eine Axialfeder eingeschaltet ist. Letztere verhindert jegliches Axialspiel, und zwar vorteilhafterweise sowohl bei der einen als auch bei der anderen Bewegungsrichtung. In keinem Fall wirken Kräfte auf die Motorlager. Die Axialkräfte werden vom Motorgehäuse aufgenommen.

Die Erfindung ist ferner dahingehend weitergebildet, daß die Schraubspindel in einer Spindelmutter gelagert ist, die mit ihren ersten Gewindeflanken federnd radial gegen die zweiten Gewindeflanken der Schraubspindel anliegt. Diese Lösung arbeitet im Prinzip wie eine Zahnstange, wobei jedoch der Unterschied der Drehbewegung der Schraubspindel überlagert wird. Es ist daher nicht erforderlich, die Spindelmutter auf dem vollen Umfang der Schraubspindel zum Anliegen zu bringen.

Ein Ausführungsbeispiel der Erfindung ist in der Zeichnung dargestellt und wird im folgenden näher beschrieben. Es zeigen

Fig. 1 einen Längsschnitt durch einen Multiformdrucker mit der Einrichtung für die Magnetstreifenverarbeitung,

Fig. 2 eine Untersicht auf die Einrichtung für die Magnetstreifenverarbeitung,

Fig. 3 einen Querschnitt A - B gemäß der Schnittangabe in Fig. 2 und in stark vergrößerter Darstellung von der Seite gesehen,

Fig. 4 einen Teilquerschnitt C - D gemäß der Schnittangabe in Fig. 2 und in entsprechend vergrößertem Maßstab,

Fig. 5 einen Ausschnitt aus Fig. 2 im Teilquerschnitt mit Schraubspindel und Spindelmutter, ebenfalls in vergrößerter Darstellung und

Fig. 6 einen Längsschnitt durch die Baugruppe der Spindelmutter.

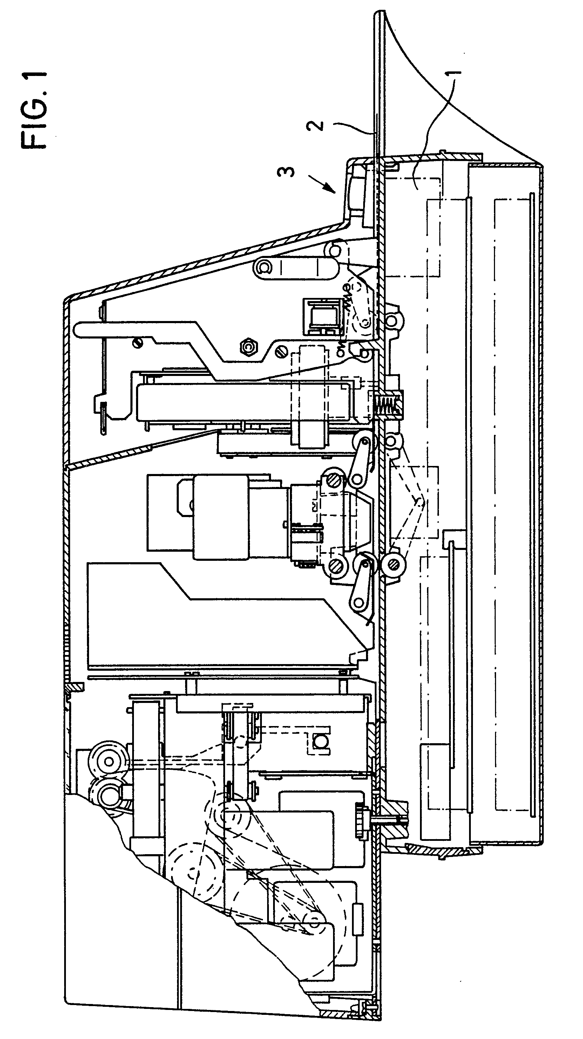

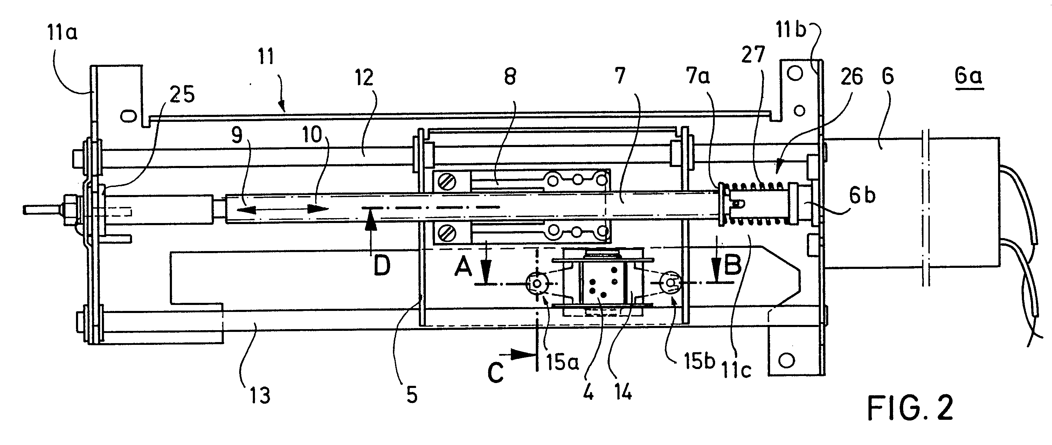

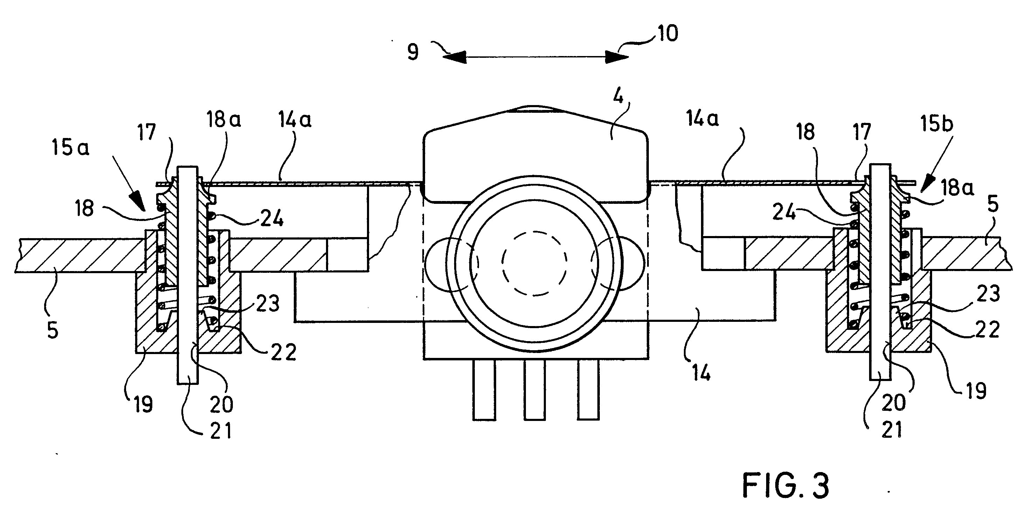

Eine Einrichtung 1 für die Datenverarbeitung mittels eines magnetischen Informationsträgers 2 findet z.B. in einem in Fig. 1 dargestellten Multiformdrucker 3 Anwendung. Die in Fig. 1 von der Seite sichtbare Einrichtung 1 ist in der Fig. 2 von unten und in Fig. 3 von der Seite umfassender erkennbar und weist einen Schreib-Lese-Kopf 4 (Fig. 3) auf. Zwischen dem Informationsträger 2, der z.B. aus einem magnetisierbaren Magnetstreifen besteht und dem Schreib-Lese-Kopf 4 findet eine Relativbewegung statt, indem entweder ein Schlitten 5 zusammen mit dem Informationsträger 2 unter dem Schreib-Lese- Kopf 4 bewegt wird oder der Schreib-Lese-Kopf 4 (wie hier in Fig. 2 gezeichnet) über den während der Verarbeitung ortsunbeweglichen Informationsträger 2 hin- und herbewegt wird. Hierbei wird der Schlitten 5 durch einen Motor 6 angetrieben. Der Motor 6 überträgt die Drehantriebskraft über eine Schraubspindel 7, deren Gewindespiel in einer zugehörigen Spindelmutter 8 aufgehoben ist. Die Antriebsverbindung zwischen dem Schlitten 5 und dem Motor 6 ist daher axial, d.h. in den Bewegungsrichtungen 9 und 10, also auch bei reversierten Motorbewegungen, spielfrei, was noch genauer erläutert wird.

Der Motor 6 ist an einem Gestell 11, bestehend aus zwei Seitenplatinen 11a und 11b sowie mit einem Brückenstück 11c gelagert, in denen außerdem Führungsstangen 12 und 13 gelagert sind, die den Schlitten 5 parallel zu den Bewegungrichtungen 9 und 10 führen.

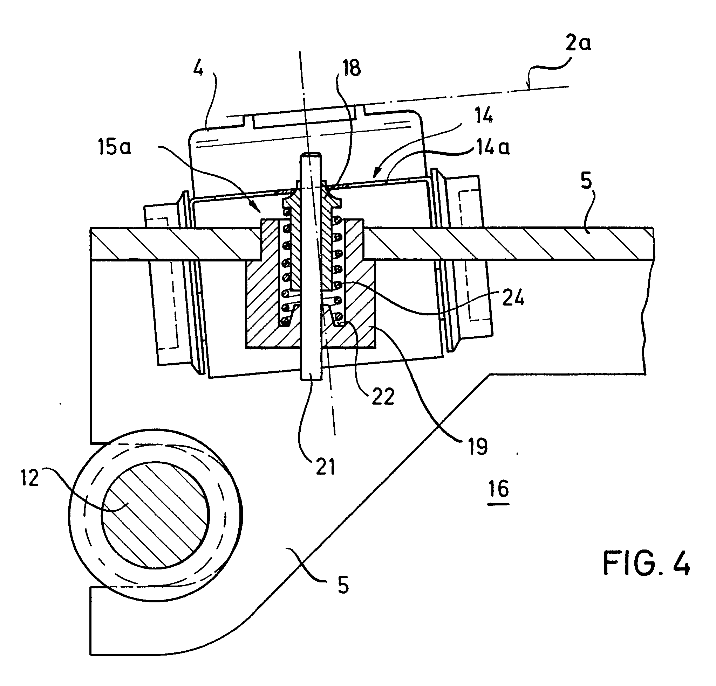

Der Schreib-Lese-Kopf 4 ist mittels eines Halters 14 in dem Schlitten 5 befestigt. Die Befestigung des Halters 14 ist in axialer Bewegungsrichtung 9 bzw. 10 ebenfalls spielfrei, obwohl der Halter 14 und damit der Schreib-Lese-Kopf 4 senkrecht zur Informationsträger-Oberfläche 2a (Fig. 4) federnd einstellbar ist, um ein nahezu luftspaltfreies Gleiten des Schreib-Lese-Kopfes 4 auf der Informationsträger-Oberfläche 2a zu gewährleisten.

In einer Ausführungsform gemäß Fig. 3 ist der Schreib-Lese-Kopf 4 auf dem Schlitten 5 an dem Halter 14 federnd gelagert. Hierzu weist der Halter 14 zumindest zwei in den axialen Bewegungsrichtungen 9 bzw. 10 des Schlittens 5 voneinander mit Abstand angeordnete, senkrecht zu den Bewegungsrichtungen 9 bzw. 10 federnde Lagerführungen 15a und 15b auf. In einer senkrecht auf der Zeichenebene der Fig. 3 verlaufenden Ebene 16, die in der Zeichenebene der Fig. 4 liegt und auf der Informationsträger-Oberfläche 2a senkrecht verläuft, ist der Halter 14 an den federnden Lagerführungen 15a und 15b schwenkbar gelagert.

Der Halter 14 bildet an Auslegern 14a Befestigungsösen 17. Letztere sind jeweils auf Lagerbuchsen 18 eingehängt, und zwar derart, daß in den Bewegungsrichtungen 9 bzw. 10 kein (axiales) Spiel entsteht. Außerdem sind in dem Schlitten 5 in axialem Abstand, d.h. in den Bewegungsrichtungen 9 bzw. 10 beabstandet Lagertöpfe 19 und in deren mittigen Bohrungen 20 sind Lagerstifte 21 fest eingepreßt. In einem Lagertopfgrund 22 ist jeweils ein Führungskonus 23 gebildet, auf dem sich jeweils eine Druckfeder 24 stützt. Die Druckfeder 24 liegt an ihrem gegenüberliegenden Ende an einem Bund 18a an. Der Schreib-Lese-Kopf 4 folgt daher jeglicher Unebenheit, schiefen Lage oder dgl. des Informationsträger 2 (Fig. 4). Hierbei wirken auf den Schreib-Lese-Kopf 4 keine Rückstellkräfte, d.h. die Lage des Schreib-Lese-Kopfes 4 ist jederzeit stabil.

Die spielfreie Antriebsverbindung zwischen dem Schlitten 5 und dem Motor 6 bzw. der Schraubspindel 7 ergibt sich zunächst aus einem Schulterlager 25, das als Festlager dient. Sodann ist auf der Motorseite 6a ein Loslager 26 gebildet, das im wesentlichen aus einer gegen einen Motorwellenbund 6b gestützten Axialfeder 27 besteht, die sich gegen einen Schraubspindelbund 7a stützt. Die Axialfeder 27 drückt daher die Schraubspindel 7 andauernd gegen das Schulterlager 25 bzw. gegen das Motorgehäuse. Es wirken aber auch keine Kräfte gegen das Motorlager, da diese vom Motorgehäuse aufgenommen werden.

Das nunmehr noch zwischen Schraubspindel 7 und Spindelmutter 8 ggf. durch Verschleiß auftretende Axialspiel wird wie folgt beseitigt: An dem Schlitten 5, der auf den Führungsstangen 12 und 13 gleitend geführt ist, ist ein Stehbolzen 28 befestigt und an diesem eine Spindelmutter-Aufnahme 29. Diese Spindelmutter-Aufnahme 29 kann - wie gezeichnet - mit der Spindelmutter 8 einteilig ausgeführt sein. Die Spindelmutter-Aufnahme 29 ist ferner mittels eines federnden Arms 30 auf dem Stehbolzen 28 befestigt, und der Arm 30 wird zusammen mit der Spindelmutter 8 mittels einer Druckfeder 31 aufgrund von durch die Federkennlinie der Druckfeder 31 sowie der Länge des Arms 30 definierten Kräften sowie aufgrund der Anzahl der Gewindegänge der Spindelmutter 8 deren ersten Gewindeflanken 32 in die zweiten Gewindeflanken 33 der Schraubspindel 7 gedrückt. Die ersten Gewindeflanken 32 und die zweiten Gewindeflanken 33 sind vorteilhafterweise als Trapezgewinde gewählt und eine Anstellung der Gewindeflanken 32 bzw. 33 gegeneinander ist daher möglich, weil die Gewindespitze der Spindelmutter 8 nicht den Gewindegrund der Schraubspindel 7 berühren kann. Die Spindelmutter 8 kann ferner vorteilhafterweise aus zwei Hälften ausgeführt sein, die beide mittels Schrauben verbunden sind.

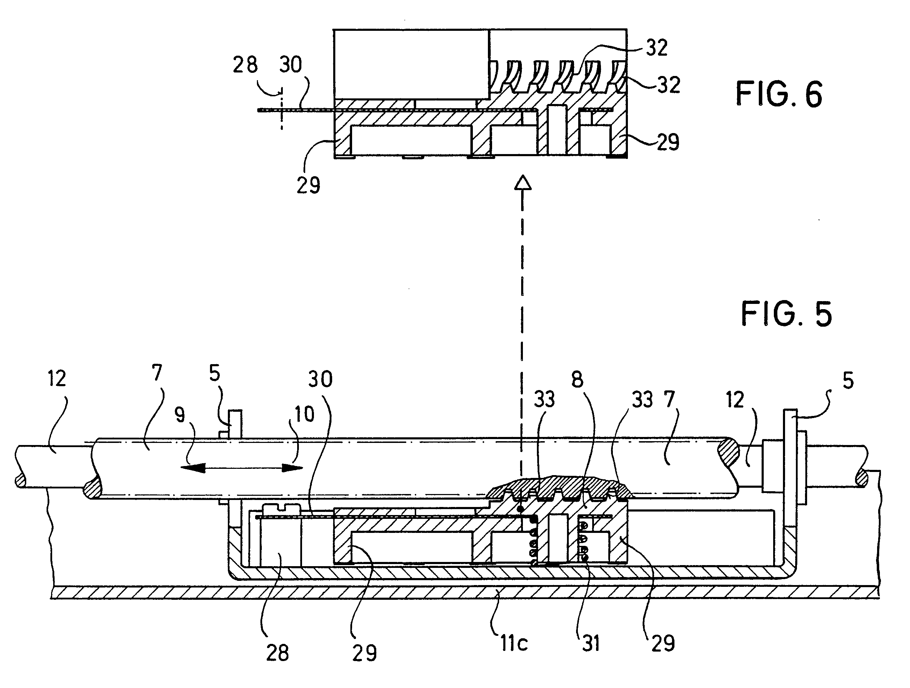

Die Spindelmutter 8 weist hierbei nur auf der Motorseite 6a einen Gewindeabschnitt auf, wobei auch nur das Gewinde auf dem unteren Umfangsbereich (Fig. 5) der Schraubspindel 7 (Fig. 6) zum Eingriff kommt.


**Ansprüche**

1. Einrichtung (1) für die Datenverarbeitung mittels magnetischen Informationsträgern (2), mit einem Schreib-Lese-Kopf (4), wobei zwischen Informationsträger (2) und Schreib-Lese-Kopf (4) bei Verarbeitung eine Relativbewegung stattfindet, indem ein Schlitten (5) durch einen Motor (6) antreibbar ist,
dadurch gekennzeichnet,
daß die Antriebsverbindung zwischen Schlitten (5) und Motor (6) axial spielfrei ist und daß der Schreib-Lese-Kopf (4) mittels eines Halters (14) ebenfalls in axialer Bewegungsrichtung spielfrei und senkrecht zur Informationsträger-Oberfläche (2a) federnd einstellbar ist.

2. Einrichtung nach Anspruch 1,
dadurch gekennzeichnet,
daß der Schreib-Lese-Kopf (4) auf dem Schlitten (5) angeordnet ist und an dem Halter (14) federnd gelagert ist, wobei der Halter (14) zumindest zwei in den axialen Bewegungsrichtungen (9,10) voneinander beabstandete, senkrecht zu den Bewegungsrichtungen (9,10) federnde Lagerführungen (15a,15b) aufweist.

3. Einrichtung nach Anspruch 2,
dadurch gekennzeichnet,
daß der Halter (14) in einer zur Informationsträger-Oberfläche (2a) senkrechten Ebene (16) an den federnden Lagerführungen (15a,15b) schwenkbar gelagert ist.

4. Einrichtung nach den Ansprüchen 2 und 3,
dadurch gekennzeichnet,
daß die federnden Lagerführungen (15a,15b) jeweils aus einem Lagertopf (19) und einem starren, mittig befestigten Lagerstift (21), ferner aus einer im Lagertopfgrund (22) anliegenden Druckfeder (24) und einer auf dem Lagerstift (21) geführten Lagerbuchse (18), gegen die sich die Druckfeder (24) abstützt, besteht.

5. Einrichtung nach einem oder mehreren der Ansprüche 1 bis 4,
dadurch gekennzeichnet,
daß der Schlitten (5) mittels einer Schraubspindel (7) antreibbar ist, die im Gestell (11) axial spielfrei mittels eines Schulterlagers (25) und auf der Motorseite (6a) mittels eines Loslagers (26) gelagert ist,
wobei zwischen einem Schraubspindelbund (7a) und dem Motorwellenbund (6b) eine Axialfeder (27) eingeschaltet ist.

6. Einrichtung nach Anspruch 5,
dadurch gekennzeichnet,
daß die Schraubspindel (7) in einer Spindelmutter (8) gelagert ist, die mit ihren ersten Gewindeflanken (32) federnd radial gegen die zweiten Gewindeflanken (33) der Schraubspindel (7) anliegt.

FIG.1

FIG. 2

FIG.3

EP 0 317 686 A1

FIG. 4

EP 0 317 686 A1

FIG. 6

FIG. 5

EP 0 317 686 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 822 376 (KOK et al.) * Spalte 2, Zeile 50 - Spalte 4, Zeile 50; Figuren * | 1 | G 11 B 25/04 G 06 K 7/08 |
| A | --- | 2,3,5,6 | |
| X | US-A-4 110 803 (TOWNSEND) * Spalte 8, Zeile 46 - Spalte 10, Zeile 43; Figuren 6-9 * | 1 | |
| A | --- | 2,3,5,6 | |
| X | US-A-4 040 097 (MIZUNO) * Spalte 5, Zeilen 39-66; Figuren 8-10 * | 1 | |
| A | --- | 2,3,5,6 | |
| A | EP-A-0 087 997 (COMPAGNIE EUROPEENNE DE COMPOSANTS ELECTRONIQUES) * Seite 2, Zeile 29 - Seite 5, Zeile 9; Figuren * --- | 1-4 | |
| A | EP-A-0 125 655 (OMRON TATEISI) * Seite 7, Zeile 19 - Seite 13, Zeile 13; Figuren * --- | 1-4 | RECHERCHIERTE SACHGEBIETE (Int. Cl.4) G 11 B G 06 K |
| A | US-A-4 538 191 (SUZUKI et al.) * Spalte 2, Zeile 7 - Spalte 4, Zeile 66; Figuren * --- | 1-4 | |
| A | PATENT ABSTRACTS OF JAPAN, Band 10, Nr. 119 (P-453)[2176], 6. Mai 1986; & JP-A-60 247 871 (FUJITSUU KIDEN K.K.) 07-12-1985 * Zusammenfassung; Figuren * --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 17-06-1988 | SPIGARELLI A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes Dokument

FPO FORM 1503 03.82 (P0403)

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 9, Nr. 314 (P-412)[2037], 10. Dezember 1985; & JP-A-60 143 490 (MATSUSHITA DENKI SANGYO K.K.) 29-07-1985 * Zusammenfassung; Figuren * ----- | 1 | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 17-06-1988 | SPIGARELLI A. |